# EUROPÄISCHE PATENTSCHRIFT

(11) **EP 2 537 570 B1**
(45) Veröffentlichungstag und Bekanntmachung des Hinweises auf die Patenterteilung: **12.08.2015**
(21) Anmeldenummer: 12004750.1
(22) Anmeldetag: 25.06.2012
(51) Int. Cl.: B01D 46/00, B01D 46/02

(54) **Taschenfilter**
Pocket filter
Filtre à manches

(30) Priorität: 24.06.2011 DE 102011105779
(43) Veröffentlichungstag der Anmeldung: 26.12.2012
(73) Patentinhaber: Bieniek, Josef, 45259 Essen (DE)
(72) Erfinder: Bieniek, Josef, 45259 Essen (DE)
(74) Vertreter: Gesthuysen Patent- und Rechtsanwälte

(56) Entgegenhaltungen:
- EP-A2- 1 579 904
- WO-A1-99/36155
- WO-A1-2005/045296
- WO-A1-2006/083239
- WO-A1-2009/000005
- DE-A1-102009 031 325
- US-A- 4 325 718

## Beschreibung

Die Erfindung betrifft einen Taschenfilter, umfassend mindestens eine Filtertasche und mindestens zwei Querstangen, wobei die Filtertasche an den Querstangen befestigt ist, wobei mindestens zwei parallel zueinander angeordnete Längsstangen vorgesehen sind, und wobei die Querstangen zwischen den Längsstangen verlaufen und mit den Längsstangen verbunden sind.

Taschenfilter, insbesondere als Filter für Raumluft, sind im Stand der Technik in einer Vielzahl von Ausgestaltungen bekannt. Die Aufbereitung von Zuluft in klimatechnischen und prozesstechnischen Anlagen ist heutzutage von zentraler und zunehmender Bedeutung. Bekannte Taschenfilter bestehen üblicherweise aus einer Mehrzahl von Filtertaschen, die an einer oder mehreren Seitenkanten miteinander verbunden sind. Eine Filtertasche besteht üblicherweise aus Vliesmaterial, das zu einer flachen Filtertasche mit zwei breiten Seitenkante und zwei schmalen Stirnkanten zusammengefügt ist. Im Montagezustand werden die einzelnen Filtertaschen, die nebeneinander angeordnet sind, von einem Medienstrom durchströmt, der in die offenen Seiten der Filtertaschen einströmt, so dass sich im Medium vorhandene mitgeführte Partikel innerhalb der Filtertaschen ablagern und dort einen Filterkuchen bilden.

Die Mehrzahl von nebeneinander angeordneten Filtertaschen wird üblicherweise in einen starren einstückigen Rahmen, beispielsweise aus Kunststoff, eingefügt und darin befestigt, so dass der durch die Einheit aus Rahmen und Filtertaschen gebildete Taschenfilter auf einfache Weise in einen Medienstrom applizierbar ist, indem er mit dem Rahmen an der gewünschten Position befestigt wird.

WO99/36155 offenbart einen Taschenfilter, der über einen umlaufenden rechteckigen Rahmen verfügt, wobei innerhalb des Rahmens Querstangen angeordnet sind, die die Filtertaschen tragen. Der umlaufende Rahmen ist aus Kunststoffprofilen gebildet, die ein Unterteil und ein klappbar an dem Unterteil gehaltenes Oberteil aufweisen, wobei Oberteil und Unterteil formschlüssig miteinander verrastbar sind. Im Montagezustand sind zwischen Oberteil und Unterteil die Filtertaschen zumindest teilweise eingeklemmt. WO2006/083239 A1 offenbart einen Kunststoffrahmen zur Erstellung von Taschenfiltern, wobei der Kunststoffrahmen ein Oberteil und ein Unterteil aufweist. Das Oberteil und das Unterteil sind jeweils einstückig ausgebildet und bilden die vollständige Grundstruktur des Taschenfilters. Beim Zusammenfügen des Oberteils und des Unterteils werden Filtertaschen zwischen Oberteil und Unterteil eingeklemmt, so dass die Filtertaschen in dem Rahmen gehalten werden und somit einen Taschenfilter bilden.

US 4,325,718 offenbart einen Taschenfilter mit einem mehrteiligen Rahmen, der aus einer Vielzahl von individuell angepassten Blechelementen zusammengefügt wird. Eine Mehrzahl an Filtertaschen wird zwischen den Blechelementen eingeklemmt und so im Rahmen gehalten, um den Taschenfilter zu bilden.

DE 10 2009 031 325 A1 offenbart eine Filterwand für raumlufttechnische Anlagen in Gebäuden. Die Filterwand umfasst einen Rahmen, der aus Blechelementen zusammengesetzt wird und gleichmäßige Aufnahmebereiche für Filtereinsätze bietet. Jeder Filtereinsatz verfügt über einen Rahmen, der Filtertaschen trägt und der in die Filterwand einsetzbar ist.

EP 1 579 904 A2 offenbart ein Verfahren zum Zusammenfügen von flexiblen Materialen mittels eines Kunststoffprofils und ein entsprechendes Kunststoffprofil. Gemäß dem Verfahren werden zwei gleiche Kunststoffprofile in eine formschlüssige Lage gebracht, wobei die Profile um 180° zueinander verdreht und einander gegenüber gestellt sind.

Die aus dem Stand der Technik bekannten Taschenfilter weisen den Nachteil auf, dass die Montage der Filtertaschen im Rahmen sehr aufwendig ist und nur unter Zuhilfenahme von speziellen Montagewerkzeugen möglich ist.

Ausgehend von dem vorgenannten Stand der Technik liegt der Erfindung die Aufgabe zugrunde, einen Taschenfilter anzugeben, der schnell und einfach zu montieren ist.

Die vorgenannte Aufgabe ist bei einem gattungsgemäßen Taschenfilter dadurch gelöst, dass die Längsstangen und die Querstangen jeweils zwei in ihrer Längserstreckung formschlüssig zusammengefügte Grundprofile umfassen, dass die Querstangen und die Längsstangen einen identischen Querschnitt aufweisen, und dass die Profilform der beiden Grundprofile zur Bildung einer Längsstange oder einer Querstange identisch ist.

Der Rahmen des Taschenfilters wird folglich durch die beiden Längsstangen und die dazwischen angeordneten Querstangen gebildet, wobei die Querstange gleichzeitig auch der Halterung der Filtertasche bzw. der Filtertaschen dienen. Die Filtertaschen sind dazu an den Querstangen befestigt, so dass die Einheit aus Querstangen und Filtertasche zwischen den Längsstangen anordenbar und an den Längsstangen befestigbar ist. Damit der Rahmen für den Taschenfilter eine rechteckige Außenkontur erhält, ist vorzugsweise jeweils eine Querstange an jeweils einem Endbereich der Längsstangen angeordnet und befestigt, so dass sich bereits auf zwei Längsstangen und zwei Querstangen ein Rahmen bildet, in dem eine Filtertasche gehalten werden kann. Im endmontierten Zustand, werden die Filtertaschen nicht nur von den Querstangen gehalten, sondern auch von den Längsstangen; das Material der Filtertasche - genauer: das die Öffnung der Filtertasche berandende Material - wird beispielsweise in den Querstangen geführt und geht dann an den Stoßstellen zwischen Querstange und Längsstange auf die Längsstange über und wird in der Längsstange weitergeführt, so dass die Berandung der Filtertasche praktisch umlaufend von Quer- und Längsstangen gehalten wird.

Vorzugsweise ist allerdings eine Mehrzahl von Filtertaschen zwischen den Längsstangen vorgesehen, so dass eine entsprechende Mehrzahl an Querstangen zur Halterung der Filtertaschen vorgesehen sein muss. Insgesamt bilden die zwei Längsstangen und die dazwischen angeordnete Mehrzahl an Querstangen somit ein Raster mit vorzugsweise identischen Abständen zwischen den Querstangen. Zwischen jeweils zwei Querstangen ist jeweils eine Filtertüte angeordnet, wobei eine Querstange, insbesondere die mittig angeordneten Querstangen, der Halterung von zwei Filtertüten dient.

Die Querstangen sind orthogonal zu den Längsstangen angeordnet und vorzugsweise jeweils mit ihren Stirnseiten an einer Längsstange befestigt. Dazu liegen die Längsstangen und die Querstangen praktisch in einer Ebene, nämlich in der Ebene, die von den den Rahmen bildenden Längs- und Querstangen aufgespannt wird, so dass eine vorteilhafte Befestigung der Querstangen über ihre jeweiligen Stirnseiten an den Seitenbereichen der Längsstangen möglich ist. Dadurch, dass eine Filtertasche mit jeweils einer Seitenwand an einer Querstange befestigt ist, wird die Filtertasche im Montagezustand im geöffneten Zustand zwischen zwei Querstangen und den entsprechenden Längsstangen gehalten, so dass das zu filternde Medium zwischen den beiden Querstangen hindurch in die Filtertasche eintreten kann. Die Filtertasche ist unterseitig geschlossen, so dass das Medium durch das Filtermaterial hindurchtreten muss und Partikel entsprechend dem Filtergrad des Materials aufgehalten werden. Die Höhe der Filtertaschen liegt üblicherweise zwischen 260 mm und 1200 mm.

Der Öffnungsgrad der Filtertasche wird durch den Abstand der beiden Querstangen zueinander bestimmt, wobei eine vollständige Öffnung entsprechend der Länge einer Stirnkante bevorzugt ist. Die Befestigung der Filtertasche an den Querstangen erfolgt im Wesentlichen über die breiten Seitenkanten der Filtertasche, wobei vorzugsweise das Material der Seitenkante einer Filtertasche über die gesamte Seitenbreite der Filtertasche zwischen den formschlüssig zusammengefügten Grundprofilen einer Querstange eingeklemmt wird. Falls eine Mehrzahl von Filtertaschen nebeneinander im Montagezustand angeordnet sein sollen, wird jeweils das Material von zwei Seitenkanten von zwei Filtertaschen zwischen dem Grundprofil einer Querstange eingeklemmt, nämlich eine erste Seitenkante einer ersten Filtertasche und eine erste Seitenkante einer zweiten Filtertasche gemeinsam über ihre gesamte Seitenbreite zwischen den formschlüssig zusammengefügten Grundprofilen eingeklemmt, so dass zwei nebeneinander angeordnete Filtertaschen über die Querstangen auch miteinander verbunden werden. An den jeweils im äußeren Endbereich der Längsstangen befindlichen Querstangen ist folglich somit nur das Material einer Seitenkante der jeweils letzten Filtertüte eingeklemmt. Besonders bevorzugt ist das Material der Stirnkanten der Filtertüten zusätzlich zwischen den Grundprofilen der Längsstangen auf gleiche Weise eingeklemmt.

Die Längsstangen und die Querstangen werden aus jeweils zwei Grundprofilen zusammengefügt, die in ihrer Längserstreckung formschlüssig miteinander verbunden werden. Die Grundprofile sind unabhängig voneinander. Die formschlüssige Verrastung der Grundprofile in ihrer Längserstreckung muss dabei nicht zwingend kontinuierlich über die gesamte Länge der Grundprofile erfolgen, sondern kann auch nur abschnittsweise an definierten Punkten vorhanden sein. Bevorzugt ist jedoch eine formschlüssige Verrastung über die gesamte Längserstreckung der Längsstangen bzw. Querstangen. Die Grundprofile werden dazu übereinander gelegt und miteinander verrastet, wobei ggf. vorher eine entsprechende Kante einer Filtertasche bzw. die Kanten der Filtertaschen zwischengelegt werden.

Ein Grundprofil hat beispielsweise einen Querschnitt mit einem Rücken und drei an dem Rücken angeordneten Stegen mit Rastnasen, wobei zwei Stege jeweils in einem Randbereich des Rückens angeordnet sind und primär der Verrastung mit dem gegenüberliegend angeordneten Grundprofil dienen, nämlich dadurch, dass die jeweils gegenüberliegenden Stege von zwei Grundprofilen miteinander über die gesamte Länge des Grundprofils verrasten. Der mittig angeordnete Steg dient primär dem Einklemmen des Fließmaterials der Filtertasche. Die Grundprofile haben vorzugsweise eine derartige Außenkontur, dass aus zwei zusammengefügten Grundprofilen eine Längsstange oder eine Querstange - eine Rahmenstange - mit vorzugsweise rechteckigem Querschnitt gebildet wird. Als Material für die Grundprofile eignen sich Kunststoffe. Ein Herstellungsverfahren zur Herstellung der Grundprofile ist beispielsweise das Extrudieren, so dass die Grundprofile in beliebiger Länge hergestellt werden können.

Der erfindungsgemäße Taschenfilter hat gegenüber dem Stand der Technik den Vorteil, dass er aus einheitlichen Rahmenstangen - Längsstangen und Querstangen - auf einfache Weise montierbar ist, wodurch aufwendige Montagewerkzeuge entfallen und eine Montage unmittelbar am Einsatzort möglich wird. Dadurch wird auch der Transport der Taschenfilter vereinfacht, da die Einzelteile des Filters weniger Raum einnehmen als ein montierter Filter. Der erfindungsgemäße Taschenfilter hat ferner den Vorteil, dass er durch die Verwendung von Längs- und Querstangen modular erweiterbar ist. So können beispielsweise auf beiden Seiten einer Längsstange jeweils Querstangen und eine entsprechende weitere Längsstange angeordnet sein, wodurch der Taschenfilter in jede beliebige Richtung um eine beliebige Anzahl von Feldern und damit eine beliebige Anzahl von Filtertaschen erweiterbar ist.

Die Querstangen und die Längsstangen weisen einen identischen Querschnitt auf. Ein identischer Querschnitt der Längsstangen und der Querstangen bedeutet dabei zunächst nur, dass die Profilform des Querschnitts bei Längsstangen und bei Querstangen identisch ist. Die absoluten Abmaße der Längsstangen kann beispielsweise gegenüber den Querstangen skaliert sein, so dass die Querstangen beispielsweise eine Höhe von 20 mm aufweisen, während die Längsstangen eine Höhe von 25 mm aufweisen, wobei die Profilform des Querschnitts allerdings vollständig identisch ist. Vorgesehen ist allerdings auch, dass die Skalierungen der Längsstangen und der Querstangen vollständig identisch sind. Für diese Ausführungsbeispiele ist von Bedeutung, dass im europäischen Raum Taschenfilter mit Rahmen mit einer Höhe von 25 mm üblich sind, wohingegen im asiatischen Raum und in den USA eher Rahmen mit einer Höhe von 20 mm üblich sind.

Dazu ist auch die Profilform der beiden Grundprofile zur Bildung einer Längsstange oder einer Querstange identisch, so dass zwei Grundprofile mit einem vollständig identischen Querschnitt aufeinander aufgerastet werden. Der Querschnitt der Grundprofile kann dabei vollständig symmetrisch sein, so dass die Grundprofile ohne Drehung aufeinander aufrastbar sind oder leicht asymmetrisch ausgestaltet sein, so dass die Grundprofile um 180° verdreht zueinander aufeinander aufgerastet werden können. Die Grundprofile können auf einfache Weise durch Ablängen von einem Endlosstrang hergestellt und zu einer Querstange oder einer Längsstange - einer Rahmenstange - zusammengefügt werden.

Die Unterscheidung zwischen Längsstange und Querstange spezifiziert bei dieser Ausgestaltung lediglich die Orientierung der Stangen im Rahmen des Taschenfilters, da die Längsstangen und die Querstangen in Bezug auf Ihren Querschnitt vollständig identisch sind. Es ist ferner auch vorgesehen, dass die Längsstangen und die zwei jeweils in den Endbereichen der Längsstangen angeordneten Querstangen eine Höhe von 25 mm - wie die Längsstangen - aufweisen, während die weiteren zwischen den Längsstangen angeordneten Querstangen eine Höhe von lediglich 20 mm aufweisen. Dadurch wird durch die Längsstangen und die Querstangen ein stabiler Rahmen ausgebildet, während die weiteren zwischengeordneten Querstangen hauptsächlich eine Haltefunktion für die Filtertaschen erfüllen. Dadurch können Taschenfilter realisiert werden, die vom Materialaufwand und damit auch von den Kosten her optimiert sind.

Zur Verbindung der Längsstangen mit den Querstangen ist bevorzugt, wenn gemäß einer weiteren Ausgestaltung die Querstangen und die Längsstangen mindestens durch Verbindungselemente miteinander verbunden sind, bevorzugt die Verbindungselemente mindestens zwei Stege und einen die Stege miteinander verbindenden Rücken aufweisen. Beispielsweise ist es aber auch vorgesehen, dass die Verbindungselemente als Verbindungsstifte ausgebildet sind. Die Verbindungselemente sind vorteilhaft formschlüssig und/oder kraftschlüssig sowohl mit den Längsstangen als auch mit den Querstangen verbunden, so dass eine stabile Befestigung zwischen den Querstangen und den Längsstangen sichergestellt ist. Als Material für die Verbindungselemente wird vorzugsweise das gleiche Material verwendet wie für die Längs- und Querstangen, es kann jedoch auch ein anderes Material, beispielsweise Metall Anwendung finden.

Ein Verbindungselement weist beispielsweise einen Rücken auf, an dem orthogonal mindestens zwei Stege angeordnet sind, die der Befestigung der Querstangen dienen. Sowohl der Rücken als auch die Stege haben beispielsweise einen kreisrunden Querschnitt, jedoch sind auch rechteckige, dreieckförmige, ovale und Querschnitte von beliebiger Geometrie denkbar. Zur einfacheren Montage sind die Endbereiche des Rückens und/oder die Endbereiche der Stege vorzugsweise angefast. Zur vorteilhaften Montage ist an jeder Verbindungsstelle zwischen einer Längsstange und einer Querstange mindestens ein Verbindungselement vorgesehen.

Verbindungselemente, die als Verbindungsstifte ausgestaltet sind, eignen sich vorteilhaft zur Verbindung, indem mindestens ein Verbindungsstift durch mindestens eine Öffnung innerhalb der Längsstange, insbesondere innerhalb des zu den Querstangen hingewandten Grundprofils der Querstange, in eine stirnseitige Nut einer Querstange eingebracht wird. Alternativ dazu ist auch vorgesehen, dass Verbindungsstifte mit ihrem Kopfbereich in eine Nut einer Querstange eingebracht werden, um von dort ausgehend in die stirnseitigen Nuten einer Querstange einzugreifen.

Um die Montage der Längsstangen und der Querstangen weiter zu vereinfachen, ist gemäß einer weiteren Ausgestaltung vorgesehen, dass die Längsstangen und die Querstangen an mindestens zwei gegenüberliegenden Seitenflächen eine Nut aufweisen, und dass zur Verbindung einer Längsstange mit einer Querstange mindestens ein Verbindungselement mit seinem Rücken in einer Nut der Längsstange geführt ist, so dass im Montagezustand eine Querstange mit einer Stirnseite auf die Stege des Verbindungselements aufgesteckt ist. Die Grundprofile weisen dazu in ihren Rücken mindestens eine Nut auf, so dass im zusammengefügten Zustand von zwei Grundprofilen zu einer Längsstange oder zu einer Querstange die Längsstange oder die Querstange an zwei gegenüberliegenden Seitenflächen eine Nut aufweisen. Die Nuten haben vorzugsweise einen im Wesentlichen kreisrunden Querschnitt und zwar derart, dass im Bereich der Öffnung der Nut ein Kreissegment von weniger als 180° geöffnet ist, so dass die Nut einen Hinterschnitt bildet und eine formschlüssige Halterung eines Verbindungselements ermöglicht ist.

Zur Verbindung einer Längsstange mit einer Querstange ist beispielsweise mindestens ein Verbindungselement mit seinem Rücken in eine Nut der Längsstange eingeschoben, so dass der Rücken und damit das Verbindungselement von der Nut gehalten werden und zwar so, dass sich die beiden Stege des Verbindungselements aus der Nut heraus, also orthogonal zu der Seitenfläche der Längsstange erstrecken. Auf diese beiden Stege ist im Montagezustand eine Querstange mit ihrer Stirnseite aufgesteckt, so dass die Längsstange und die Querstange über das Verbindungselement miteinander verbunden sind. Die Stege des Verbindungselements greifen dazu in die Stirnseite einer Querstange ein und stellen eine kraft- und/oder formschlüssige Verbindung her.

Eine noch vorteilhaftere Verbindung zwischen Längsstangen und Querstangen lässt sich gemäß einer weiteren Ausgestaltung des Taschenfilters herstellen, indem auf zwei gegenüberliegenden Seitenflächen jeweils zwei parallel verlaufende Nuten vorgesehen sind. Der Abstand der beiden parallel verlaufenden Nuten ist vorzugsweise mit dem Abstand zu den beiden Nuten auf der gegenüberliegenden Seitenfläche, so dass die Nuten im Querschnitt einer Längsstange oder einer Querstange in einem Quadrat angeordnet sind.

Das vorgenannte Ausführungsbeispiel ergänzt sich besonders vorteilhaft mit dem nachfolgenden Ausführungsbeispiel, das vorsieht, dass die Stege eines Verbindungselements stirnseitig in die Nuten der Querstange eingesteckt sind. Die stege eines Verbindungselements, die sich vorzugsweise orthogonal zu der jeweiligen Seitenfläche einer Längsstange erstrecken, sind im Montagezustand in die an den gegenüberliegenden Seitenflächen einer Querstange angeordneten Nuten stirnseitig eingesteckt, so dass die Stege längs in den Nuten geführt sind und von diesen gehalten werden. Durch den vorzugsweise identischen Abstand der jeweiligen Nuten zueinander kann die Verbindung zwischen einer Längsstange und einer Querstange auch durch zwei Verbindungselemente realisiert werden, die übereinander jeweils mit ihrem Rücken in der oberen bzw. der unteren Nut einer Längsstange gehalten sind, so dass sich vier Stege in Richtung der Stirnseite einer Querstange erstrecken und jeweils in die vier Nuten der Querstange eingebracht werden können. In der Querstange werden sie kraft- und/oder formschlüssig gehalten.

Neben Ausgestaltungen, bei denen eines oder mehrere Verbindungselemente zur Verbindung einer Querstange mit einer Längsstange vorgesehen sind, hat sich eine weitere Ausgestaltung als vorteilhaft herausgestellt, bei der ein Verbindungselement vorgesehen ist, das eine Mehrzahl von Stegpaaren zur Befestigung einer Mehrzahl von Querstangen aufweist. Ein solches Verbindungselement weist einen langen Rücken auf, der beispielsweise der Länge einer Querstange oder einer Längsstange oder beispielsweise auch der Hälfte der Länge einer Querstange oder einer Längsstange entspricht, so dass das Verbindungselement mit seinem gesamten Rücken in die Nut einer Längsstange einführbar ist. An dem Verbindungselement sind in vorab definierten, vorzugsweise gleichen, Abständen Stegpaare, bestehend aus zwei Stegen, zur Befestigung einer Querstange angeordnet. Durch ein solches Verbindungselement ist der Abstand zwischen den Querstangen vorab durch den Abstand der Stegpaare auf dem Verbindungselement festgelegt. Der Abstand zwischen den beiden Stegen eines Stegpaares entspricht vorzugsweise dem Abstand der Nuten untereinander bzw. dem Abstand zwischen zwei Nuten auf den gegenüberliegenden Seiten.

Die Filtertaschen sind jeweils an den Querstangen befestigt. Damit beispielsweise auch ein Einklemmen der Stirnkanten einer oder mehrerer Filtertaschen zwischen den Grundprofilen einer Längsstange möglich ist, ohne dass in den Eckbereichen ein Knittern des Materials einer Filtertasche auftritt, ist gemäß einer weiteren Ausgestaltung vorgesehen, dass im Bereich der Seitenwände der Filtertaschen Ausnehmungen in die Längsstangen, insbesondere in mindestens ein Grundprofil, eingebracht sind. Vorzugsweise weist beispielsweise das in Richtung der Querstangen angeordnete Grundprofil im Bereich der Seitenwände der Filtertaschen jeweils eine geringfügige Unterbrechung des Profils auf, so dass die Stirnwände der Filtertaschen zwischen den Grundprofilen einer Längskante einklemmbar sind, jedoch die Seitenwände der Filtertasche aus der Längsstange problemlos herausführbar sind. Das mit dem ersten Grundprofil verbundene zweite Grundprofil der Längsstange muss dazu nicht notwendigerweise auch eine Ausnehmung aufweisen, diese kann jedoch aus Gründen einer einfacheren Fertigung trotzdem vorhanden sein. Diese Ausgestaltung weist den Vorteil auf, dass eine durchgängige Stoffbahn über Eck ermöglicht ist.

Ein besonders bevorzugter Taschenfilter, der eine vorteilhafte Stabilität aufweist, lässt sich erstellen, indem mindestens sieben Querstangen und mindestens sechs Filtertaschen zwischen den beiden Längsstangen vorgesehen sind, wobei die Filtertaschen durch die Querstangen miteinander verbunden sind. Mit ihren Seitenwänden aneinander angeordnet, sind folglich sechs Filtertaschen nachfolgend nebeneinander an den Querstangen bzw. an den Längsstangen befestigt. Die Filtertaschen werden an ihren Seitenwänden untereinander verbunden, indem sie jeweils gemeinsam zwischen den Grundprofilen einer Querstange eingeklemmt werden. In den Endbereichen ist jeweils nur eine Seitenwand einer einzigen Filtertüte zwischen den Grundprofilen der dort angeordneten Querstangen befestigt. Vorteilhaft sind gleichzeitig auch die Stirnkanten der Filtertaschen zwischen den Grundprofilen der Längsstangen eingeklemmt.

Die Stabilität des Taschenfilters, insbesondere des Rahmens, lässt sich gemäß einer weiteren Ausgestaltung dadurch steigern, dass in mindestens einem Endbereich der Querstangen ein Rasthaken ausgebildet ist, insbesondere der Rasthaken im Montagezustand mit einer Längsstange verrastet ist, bevorzugt, dass der Rasthaken mit mindestens einem Grundprofil der Längsstange verrastet ist, besonders bevorzugt, dass der Rasthaken mit dem von den Querstangen abgewandten Grundprofil der Längsstange verrastet ist. Im Montagezustand sind die Querstangen derart zwischen den Längsstangen angeordnet, dass sie mit ihren Endbereichen mit den Längsstangen kontaktieren. In mindestens einem dieser Endbereiche, vorzugsweise in beiden Endbereichen, ist ein Rasthaken vorgesehen, der im Montagezustand mit einer an der Längsstange vorgesehenen Rastausnehmung oder einem Rastvorsprung verrastet, so dass eine Querstange formschlüssig mit der Längsstange über den Rasthaken verbunden ist. Zusätzlich zu der formschlüssigen Verbindung mit dem Rasthaken ist auch vorgesehen, dass Verriegelungselemente, die vorteilhaft als einzelne Verriegelungsstifte oder als Verriegelungselemente mit zwei Stegen und einem die Stege verbindenden Rücken ausgebildet sind, durch Öffnungen in mindestens einem Grundprofil einer Längsstange stirnseitig in wenigstens eine Nut, vorzugsweise in zwei Nuten, der Querstange eingesteckt sind. Die Öffnungen für die Verriegelungselemente in der Längsstange sind vorzugsweise lediglich in dem den Querstangen zugewandten Grundprofil vorgesehen.

Als besonders vorteilhaft hat sich herausgestellt, wenn der Rasthaken einer Querstange im Montagezustand mit mindestens einem Grundprofil der Längsstange verrastet ist. Dazu hintergreift der Rasthaken beispielsweise durch eine Ausnehmung, eine Kante, eine Wand oder einen Vorsprung an einem Grundprofil, der sich als Rastgegenstück eignet, um eine vorteilhafte formschlüssige Verbindung herzustellen. Besonders bevorzugt ist der Rasthaken einer Querstange im Montagezustand mit dem von den Querstangen abgewandten Grundprofil der Längsstange verrastet, wobei es sich als vorteilhaft herausgestellt hat, wenn der Rasthaken im Montagezustand mit dem mittleren Steg des von den Querstangen abgewandten Grundprofils der Längsstange verrastet ist. Durch eine derartige Verbindung der Querstangen mit dem von den Querstangen abgewandten Grundprofil der Längsstange lässt sich eine besondere Steifigkeit des Taschenfilters erreichen. Beispielsweise wird der Rasthaken im Endbereich einer Querstange dadurch hergestellt, dass die Grundprofile im Endbereich entsprechend gestanzt werden, so dass sie die Form eines Rasthakens aufweisen.

Die Positionierung der Querstangen relativ zu den Längsstangen lässt sich gemäß einer weiteren Ausgestaltung dadurch verbessern, dass die Querstangen in mindestens einem Endbereich einen Absatz aufweisen, insbesondere der Absatz in beiden Grundprofilen der Querstangen vorgesehen ist. Der Absatz entspricht beispielsweise der Hälfte der Höhe einer Querstange, wobei die Tiefe des Absatzes etwa 2 bis 15 mm beträgt. Mit der Tiefe ist dabei der Abstand zur Stirnseite einer Querstange gemeint. Mit dem Absatz lässt sich die Querstange vorteilhaft an einer Längsstange anordnen, so dass sich die Längsstange zumindest teilweise im Absatz befindet. Wenn der Absatz nur in einem Grundprofil vorgesehen ist, ist es beispielsweise möglich, dass sich in einem Endbereich einer Längsstange das außen liegende Grundprofil über die Stirnseite der Längsstange erstreckt, um diese abzudecken, wobei nur das innen liegende Grundprofil der Querstange einen Absatz aufweist.

Besonders bevorzugt ist jedoch, dass der Absatz in beiden Grundprofilen der Querstange vorgesehen ist, so dass eine Querstange mit einem Absatz die Längsstange zumindest teilweise aufnehmen kann. Vorteilhaft ist es auch, wenn ein Rasthaken am Absatz vorgesehen ist, so dass der Rasthaken im Montagezustand mit einer Längsstange verrastet ist, beispielsweise derart, wie es für das vorangehende Ausführungsbeispiel beschrieben. Dadurch, dass der Rasthaken am Absatz angeordnet ist, lässt sich die Längsstange vorteilhaft innerhalb des Absatzes anordnen, wobei gleichzeitig eine formschlüssige Verrastung mit dem Rasthaken erfolgt.

Durch den Absatz entstehen an einer Querstange eine erste und eine zweite Stirnfläche, nämlich eine erste Stirnfläche, die endseitig angeordnet ist, und eine zweite Stirnfläche, die geringfügig zurückversetzt angeordnet ist. Eine oder beide der Stirnflächen sind vorzugsweise geringfügig geneigt, wodurch eine vorteilhaftere Anordnung der Querstange an einer Längsstange und eine einfache Montage möglich ist. Als besonders vorteilhaft hat sich eine Neigung zwischen 1° und 5° herausgestellt.

Um die Querstangen vorteilhaft an den Längsstangen anordnen zu können, ist gemäß einer weiteren Ausgestaltung vorgesehen, dass in einer Längsstange eine der Anzahl der Querstangen entsprechende Anzahl an Ausnehmungen vorgesehen ist, bevorzugt, dass mindestens das zu den Querstangen hingewandte Grundprofil einer Längsstange die Ausnehmungen aufweist. Die Querstangen lassen sich durch die Ausnehmungen zumindest teilweise innerhalb der Längsstange anordnen, so dass die Querstangen vorteilhaft an der Längsstange positioniert sind. Eine Ausnehmung weist dazu mindestens die Breite des Querschnitts einer Querstange auf. Beispielsweise lassen sich mit mindestens einem Absatz im Endbereich ausgebildete Querstangen vorteilhaft in den Ausnehmungen anordnen, so dass eine Querstange mit ihrem Absatz in eine entsprechende Ausnehmung der Längsstange hineingreift, so dass die Längsstange mit einer Querstange formschlüssig über den Absatz und die Ausnehmung miteinander verbunden sind. Vorteilhaft ist ferner ein Rasthaken am Absatz vorgesehen, der innerhalb der Längsstange mit der Längsstange, vorzugsweise mit dem mittleren Steg des von den Querstangen abgewandten Grundprofils, verrastet. Vorzugsweise befindet sich eine derart an einer Längsstange angeordnete Querstange in einer Ebene mit der Längsstange.

Insbesondere ist lediglich das zu den Querstangen hingewandte Grundprofil einer Längsstange mit Ausnehmungen versehen, so dass die Längsstangen im Bereich einer Ausnehmung etwa zur Hälfte ausgenommen sind.

Zur Befestigung der Querstangen an den Längsstangen ist gemäß einer weiteren Ausgestaltung vorgesehen, dass die Längsstangen im Bereich der Querstangen mindestens eine Öffnung aufweisen, insbesondere die Öffnung von mindestens einem Verbindungselement durchtreten ist. Die Öffnung ist vorzugsweise in dem Bereich vorgesehen, in dem sich im Montagezustand die stirnseitigen Nuten einer Querstange befinden, so dass durch die Öffnungen Verbindungselemente in die stirnseitigen Nuten der Querstangen einsteckbar sind. Ganz besonders bevorzugt sind die Öffnungen oberhalb der Ausnehmungen in der Stange, vorzugsweise in dem zu den Querstangen hingewandten Grundprofil der Längsstange, angeordnet, so dass eine Querstange mit ihrem Absatz in der Ausnehmung anordenbar und mit einer Rastnase verrastbar ist, wobei zusätzlich oberhalb der Ausnehmung und des Absatzes die Verbindungselemente durch das zu den Querstangen hingewandte Grundprofil stirnseitig in die Nuten einer Querstange eingesteckt werden. Es erfolgt also eine formschlüssige Verbindung einerseits durch die Rastnase und das Einbringen des Absatzes in die Ausnehmung, andererseits durch die Verbindungselemente, wodurch die Querstange besonders stabil mit der Längsstange verbunden wird.

Ein vorteilhaftes Grundprofil zur Herstellung von Querstangen und Längsstangen für einen Taschenfilter ist bereits vorangehend beschrieben worden. Ein solches Grundprofil ist besonders vorteilhaft, wenn es einen Querschnitt aufweist, der einen Rücken und drei an dem Rücken angeordnete Stege mit Rastnasen aufweist, wobei zwei Stege im Randbereich des Rückens angeordnet sind und wobei zwei Grundprofile durch formschlüssige Verbindung von mindestens zwei Stegen zu einer Längsstange oder einer Querstange - einer Rahmenstange - verbindbar sind, gekennzeichnet dadurch, dass die Stege im Randbereich eine derartige Form aufweisen, dass die mit zwei Grundprofilen erstellbare Längsstange oder Querstange eine rechteckige Außenkontur aufweist.

Eine Rahmenstange ist dabei eine Längsstange oder eine Querstange. Die Stege im Randbereich erstrecken sich unmittelbar orthogonal zur Fläche des Rückens im Querschnitt des Grundprofils, so dass durch die an dem Rücken angeordneten Stege bereits zwei Eckbereiche einer Rahmenstange gebildet werden. Der mittlere Steg eines Grundprofils dient primär dem Einklemmen des Materials einer Filtertasche, während die beiden Stege in den Randbereichen primär der Verrastung mit den jeweils gegenüberliegenden Stegen des zweiten Grundprofils zur Erstellung einer Rahmenstange dienen.

Gemäß einer bevorzugten Ausgestaltung des Grundprofils ist vorgesehen, dass zwei Nuten im Rücken vorgesehen sind, und dass die Öffnungen der Nuten auf der von den Stegen abgewandten Seite des Rückens angeordnet sind. Durch eine solche Ausgestaltung wird sichergestellt, dass eine zuverlässige Verbindung zwischen den Längsstangen und den Querstangen herstellbar ist, wobei beim Zusammenfügen der zweier Grundprofile zu einer Rahmenstange die Nuten auf gegenüberliegenden Seitenflächen angeordnet sind, dadurch, dass sie jeweils im Rücken eines Grundprofils angeordnet sind. Die Nuten haben vorzugsweise einen im Wesentlichen kreisförmigen Querschnitt und bilden einen Hinterschnitt.

Im Einzelnen gibt es nun eine Vielzahl von Möglichkeiten den erfindungsgemäßen Taschenfilter und das Grundprofil auszugestalten und weiterzubilden. Dazu wird verwiesen sowohl auf die den Patentansprüchen 1 und 10 nachgeordneten Patentansprüche, als auch auf die nachfolgende Beschreibung von bevorzugten Ausführungsbeispielen in Verbindung mit der Zeichnung. In der Zeichnung zeigen:
- Fig. 1: ein Ausführungsbeispiel eines erfindungsgemäßen Taschenfilters, mit in einen Rahmen befestigten Filtertaschen,
- Fig. 2: ein Ausführungsbeispiel eines Rahmens für einen erfindungsgemäßen Taschenfilter, zusammengesetzt aus Längsstangen und Querstangen in perspektivischer Seitenansicht,
- Fig. 3: den Rahmen gemäß Fig. 2 in perspektivischer Explosionsdarstellung,
- Fig. 4: ein Ausführungsbeispiel eines Querschnitts einer Längsstange mit daran angeordneter Querstange,
- Fig. 5: ein Ausführungsbeispiel eines Verbindungselements mit einer Mehrzahl an Stegpaaren,
- Fig. 6: ein Ausführungsbeispiel eines Grundprofils im Querschnitt,
- Fig. 7: ein weiteres Ausführungsbeispiel eines Grundprofils im Querschnitt,
- Fig. 8: ein Ausführungsbeispiel eines Grundprofils für eine Längsstange,
- Fig. 9: ein Ausführungsbeispiel eines Rahmens für einen erfindungsgemäßen Taschenfilter, zusammengesetzt aus Längsstangen und Querstangen in Draufsicht,

- Fig. 10: ein Ausführungsbeispiel einer Querstange mit Rasthaken,
- Fig. 11a: ein weiteres Ausführungsbeispiel einer Querstange mit Rasthaken,
- Fig. 11b: ein weiteres Ausführungsbeispiel einer Querstange mit Rasthaken,
- Fig. 12: ein Ausführungsbeispiel eines Querschnitts einer Längsstange mit daran angeordneter Querstange,
- Fig. 13a: ein weiteres Ausführungsbeispiel eines Querschnitts einer Längsstange mit daran angeordneter Querstange,
- Fig. 13b: ein weiteres Ausführungsbeispiel eines Querschnitts einer Längsstange mit daran angeordneter Querstange,
- Fig. 13c: ein weiteres Ausführungsbeispiel eines Querschnitts einer Längsstange mit daran angeordneter Querstange,
- Fig. 14: ein Ausführungsbeispiel eines Verbindungselements, und
- Fig. 15: ein weiteres Ausführungsbeispiel eines Verbindungselements.

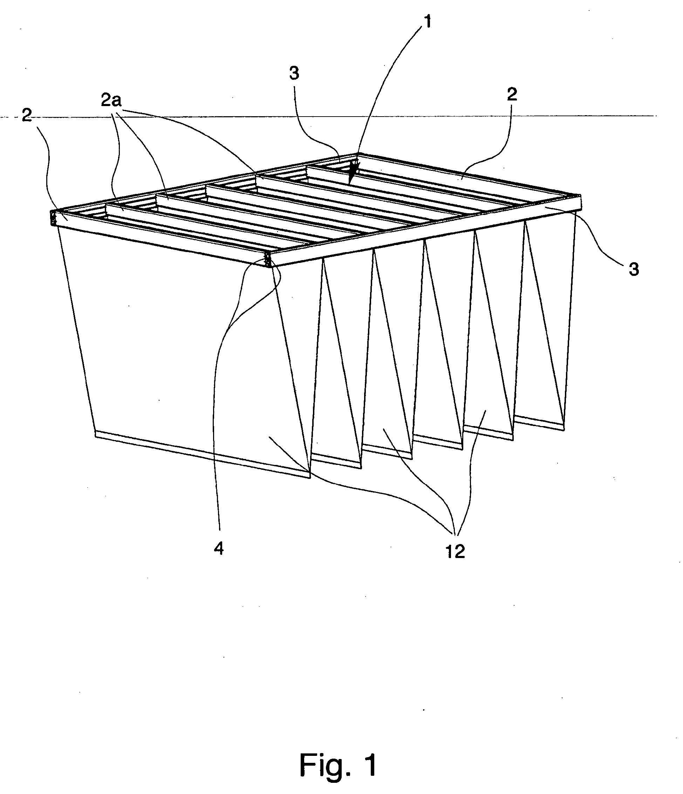

Fig. 1 zeigt ein Ausführungsbeispiel eines Taschenfilters mit einem Rahmen 1 und verschiedenen Querstangen 2, wobei mehrere Taschen 12 von dem Rahmen 1 und den Querstangen 2 gehalten werden. Die Taschen 12 bestehen im vorliegenden Ausführungsbeispiel aus einem Vliesstoff. Der dargestellte Taschenfilter ist dazu vorgesehen, mit seinem Rahmen 1 in eine Taschenfilteraufnahme, beispielsweise in einem Lüftungsrohr, eingeschoben und dort gehalten zu werden. Der Luftstrom ist im Montage- und Betriebszustand in die Öffnungen der Taschen 12 gerichtet

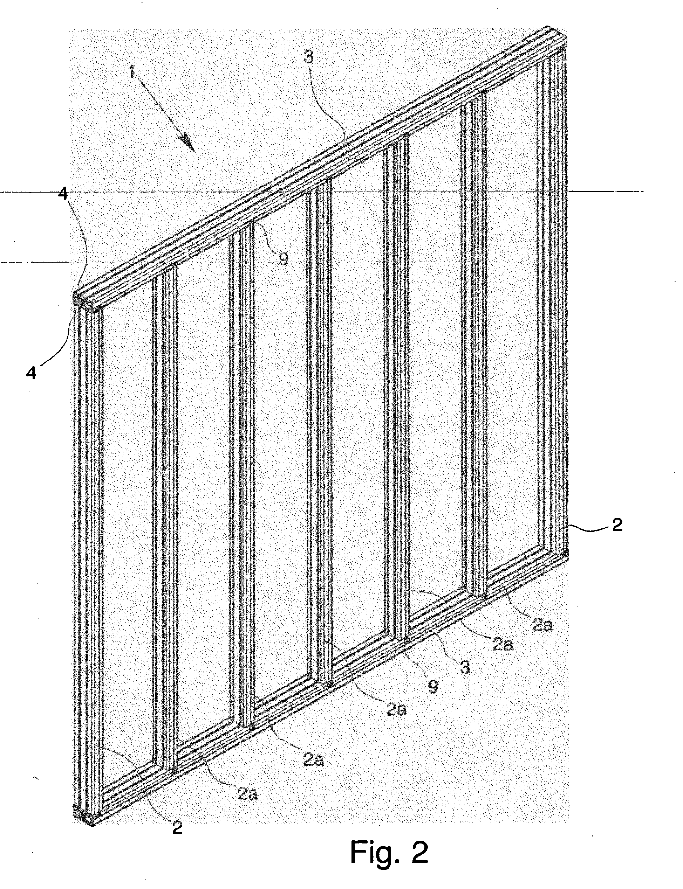

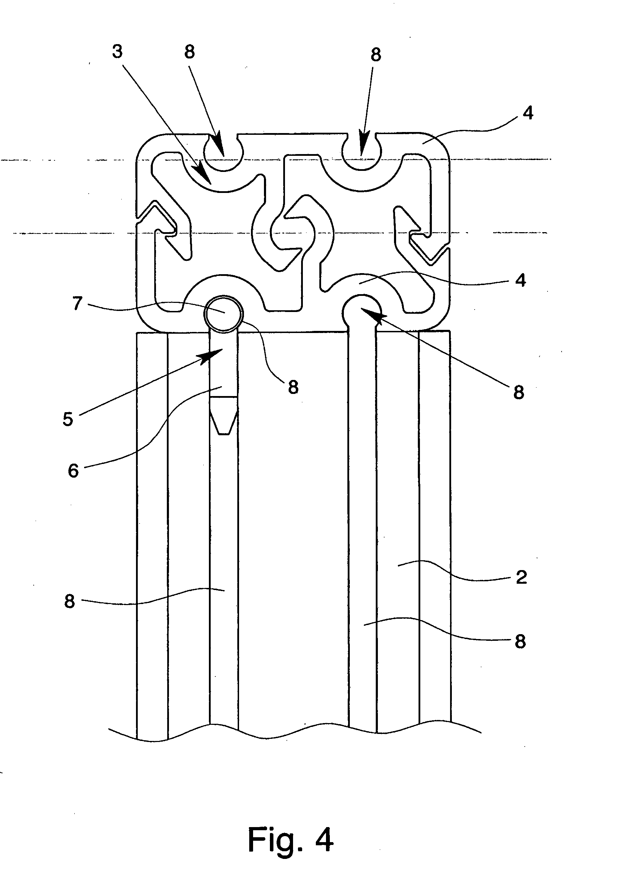

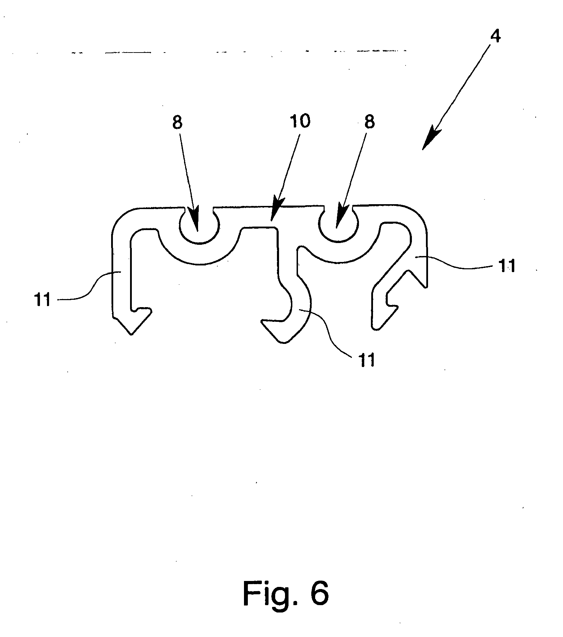

Fig. 2 zeigt ein Ausführungsbeispiel eines Rahmens 1 für einen Taschenfilter. Der Tragrahmen umfasst sieben Querstangen 2 und zwei parallel zueinander angeordnete Längsstangen 3. Die Querstangen 2 verlaufen zwischen den Längsstangen 3 und sind an ihren Stirnseiten mit den Längsstangen 3 verbunden. Sowohl Längsstangen 3 als auch Querstangen 2 sind aus jeweils zwei in ihrer Längserstreckung formschlüssig zusammengefügten Grundprofilen 4 gebildet. Ein einzelnes Grundprofil 4 ist in Fig. 6 dargestellt, ein Querschnitt einer Längsstange 3, gebildet aus zwei Grundprofilen 4 ist Fig. 4 zu entnehmen.

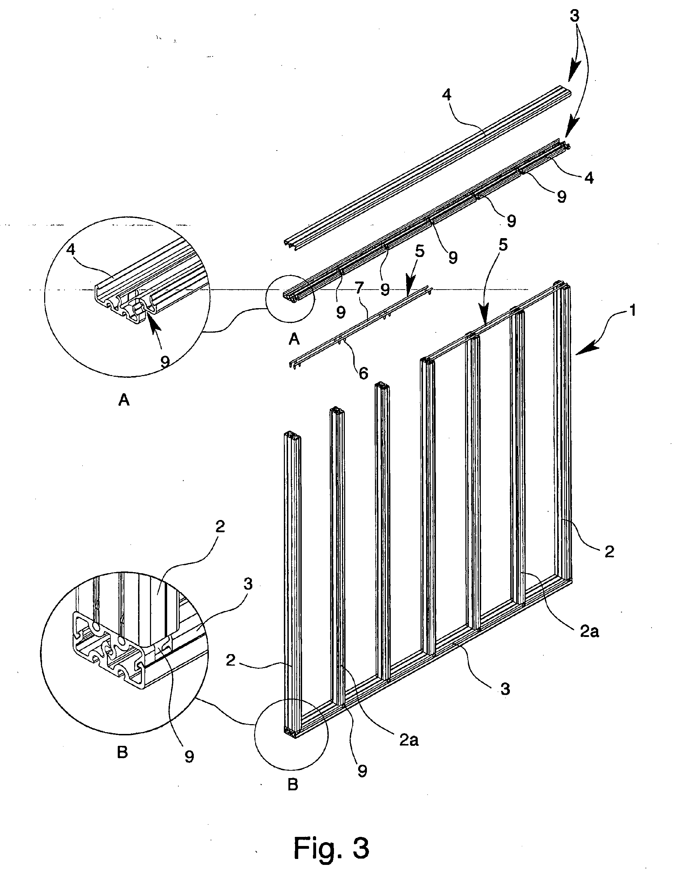

Die Querstangen 2 und Längstangen 3 des in Fig. 2 dargestellten Rahmens 1 weisen einen identischen Querschnitt auf, wobei damit hier eine identische Profilform des Querschnitts gemeint ist. Die Längsstangen 3 und die in den Endbereichen der Längsstangen 3 angeordneten Querstangen 2 weisen eine Höhe von 25 mm auf, während die weiteren fünf Querstangen 2a, die zwischen den beiden äußeren Querstangen 2 im Randbereich angeordnet sind, demgegenüber skaliert sind und eine Höhe von lediglich 20 mm aufweisen. Die Verbindung von Querstangen 2 - allgemein gemeint sind stets auch die Querstangen 2a - und Längsstangen 3 erfolgt durch in Fig. 3 dargestellte Verbindungselemente 5, die eine Mehrzahl an Stegen 6 und einen die Stege 6 verbindenden Rücken 7 aufweisen.

Fig. 4 zeigt den Querschnitt einer Längsstange 3 mit einer daran über ein Verbindungselement 5 angeordneten Querstange 2. Die Längsstange 3 weist an zwei gegenüberliegenden Seitenflächen jeweils zwei Nuten 8 auf, die bei diesem Ausführungsbeispiel im Wesentlichen kreisförmig ausgestaltet sind, wobei der Kreis an der Seitenfläche über einen Winkel von weniger als 180° geöffnet ist, so dass die Nuten einen Hinterschnitt 8 zur Aufnahme eines Rückens 7 eines Verbindungselements 5 ausbilden. Zur Verbindung der Längsstange 3 mit der Querstange 2 ist das Verbindungselement 5 mit seinem Rücken 7, der ebenfalls einen kreisförmigen Querschnitt aufweist, in eine Nut 8 der Längsstange 3 eingeschoben, so dass sich die Stege 6 orthogonal aus der Seitenfläche der Längsstange 8 in Richtung der Querstange 2 erstrecken. Die Stege 6 sind dabei stirnseitig in die Nuten 8 der Querstange 2 eingesteckt, so dass über das Verbindungselement 5 eine Verbindung zwischen Längsstange 3 und Querstange 2 hergestellt ist. Die Stege des Verbindungselements 5 sind im Endbereich zur einfacheren Montage angefast.

Die Nuten 8 sind bei diesem Ausführungsbeispiel gemäß Fig. 4 quadratisch im Querschnitt sowohl der Längsstangen 3 als auch der Querstangen 2 angeordnet, so dass der Abstand der Nuten 8 zueinander in alle Richtungen gleich ist, was den Vorteil hat, dass die Stege 6 der Verbindungselemente 5 vorteilhaft stirnseitig in die Nuten 8 der Querstangen 2 eingreifen können. Zusätzlich kann durch diese Ausgestaltung auch eine Mehrzahl von Verbindungselementen 5 übereinander zur Befestigung einer Querstange 2 an einer Längsstange 3 vorgesehen sein, so dass sich von der Seitenfläche einer Längsstange 3 jeweils vier Stege 6 in Richtung der dort angeordneten Querstange 2 erstrecken, wobei die vier Stege 6 stirnseitig in die vier Nuten 8 der Querstange eingebracht sind.

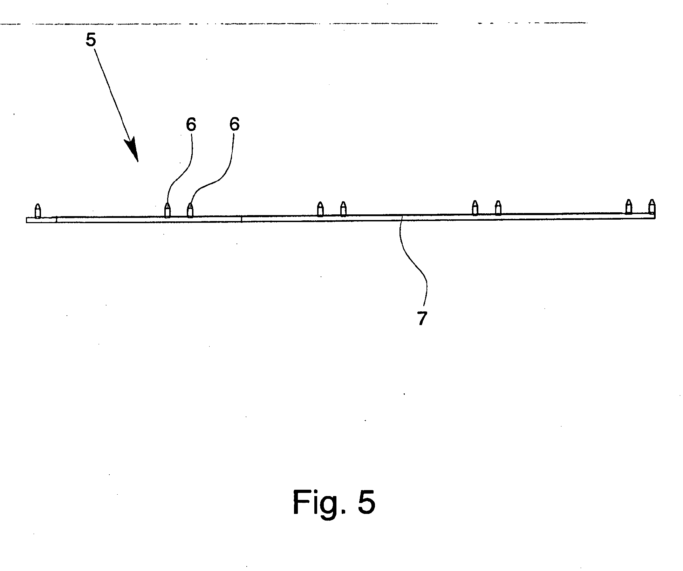

Ein Ausführungsbeispiel eines Verbindungselements 5, das sich gemäß Fig. 3 etwa über die Hälfte der Länge einer Längsstange 3 erstreckt, ist auch in Fig. 5 dargestellt. Das Verbindungselement 5 weist einen gemeinsamen Rücken 7 auf, der - wie bereits beschrieben - etwa die Hälfte der Länge einer Längsstange 3 aufweist. An dem Rücken 7 sind jeweils paarweise Stege 6 zu Stegpaaren angeordnet, die im Montagezustand stirnseitig in die Nuten 8 der Querstangen 2 eingebracht werden. Der Abstand zwischen den zu Stegpaaren angeordneten Stegen 6 definiert den Abstand der Querstangen 2 im Montagezustand zueinander und damit den Öffnungsgrad der - nicht dargestellten - Filtertaschen. In dem Rahmen 1 gemäß Fig. 2 und Fig. 3 wären montierte Filtertaschen vollständig geöffnet montiert.

Fig. 3 zeigt einen Rahmen 1 in Explosionsdarstellung. Im Montagezustand werden die Seitenwände der Filtertaschen zwischen den Grundprofilen 4 der Querstangen 2 gehalten. Um zusätzlich die Stirnwände der Filtertaschen zwischen den Grundprofilen 4 der Längsstangen 3 einzuklemmen, ohne dass dabei das Material der Filtertaschen in den Eckbereichen verknickt, sind in einem Grundprofil 4 Ausnehmungen 9 vorgesehen, durch die das Material der Seitenwände der Filtertaschen nach außen treten kann. Die Gestaltung der Ausnehmungen 9 in dem Grundprofil 4 ist in der Detailansicht A zu erkennen. Die Ausnehmung 9 erstreckt sich nur auf der Hälfte der Breite eines Grundprofils 4. Das zweite Grundprofil 4 zur Bildung der Längsstange 3 weist keine Ausnehmungen 9 auf. Die Detailansicht B zeigt die Ausnehmung 9 im Montagezustand des Tragrahmens 1 - ohne eingeklemmte Filtertasche. Im Bereich jeder Querstange 2 ist in jeder Längsstange 3 eine entsprechende Ausnehmung 9 zur Durchführung der dort im Montagezustand vorhandenen Seitenwände der Filtertaschen vorgesehen.

Fig. 6 zeigt ein Ausführungsbeispiel eines Grundprofils 4 zur Herstellung von Querstangen 2 und Längsstangen 3. Im in Fig. 6 dargestellten Querschnitt weist das Grundprofil 4 einen Rücken 10 und drei an dem Rücken 10 angeordnete Stege 11 auf. Die Stege 11 sind mit Rastnasen versehen, die jeweils mit den Rastnasen der Stege 11 des gegenüberliegend angeordneten Grundprofils 4 im Montagezustand verrasten. Zwei der Stege 11, die primär der Verrastung mit den gegenüberliegenden Stegen 11 eines weiteren Grundprofils 4 dienen, sind jeweils im jeweils im Randbereich des Rückens 10 geordnet, nämlich derart, dass sie sich orthogonal zum Rücken 10 erstrecken, so dass die aus zwei solchen Grundprofilen 4 herstellbaren Querstangen 2 und Längsstangen 3 eine rechteckige Außenkontur aufweisen.

Der mittlere Steg 11 dient primär dem Einklemmen eines zwischen die Grundprofile 4 eingebrachten Vliesstoffes einer oder mehrerer Filtertaschen. Im Rücken 10 des Grundprofils 4 sind jeweils die parallel zueinander verlaufenden Nuten 8 mit im Wesentlichen kreisförmigem Querschnitt vorgesehen. Die Öffnung der Nuten ist dabei auf der von den Stegen 11 abgewandten Seite des Rückens 10 angeordnet. Die Nuten sind folglich im Montagezustand einer Querstange 2 oder einer Längsstange 3 an gegenüberliegenden Seitenbereichen angeordnet.

Zur Herstellung einer Querstange 2 oder einer Längsstange 3 werden zwei Grundprofile 4 gemäß Fig. 6 in ihrer Längserstreckung formschlüssig über die Stege 11 miteinander verbunden, wobei die Grundprofile 4 - wie in Fig. 4 dargestellt - um 180° zueinander verdreht sind, so dass sich die Grundprofile 4 im Montagezustand zu einer im Wesentlichen rechteckigen Außenkontur einer Längsstange 3 bzw. einer Querstange 2 ergänzen.

Gemäß Fig. 2 sind die Querstangen 2 in regelmäßigen Abständen zueinander zwischen den Längsstangen 3 angeordnet, so dass ein gleichmäßiges Raster des Rahmens 1 entsteht. Im Montagezustand sind in diesem Tragrahmen die - nicht dargestellten - Filtertaschen gehalten, nämlich dadurch, dass diese mit ihren Seitenwänden zwischen den Grundprofilen 4 der Querstangen 2 eingeklemmt sind und mit ihren Stirnwänden zwischen den Grundprofilen 4 der Längsstangen 3 eingeklemmt sind. Dadurch können sich die Filtertaschen als durchgängige Stoffbahn auch über Eck erstrecken.

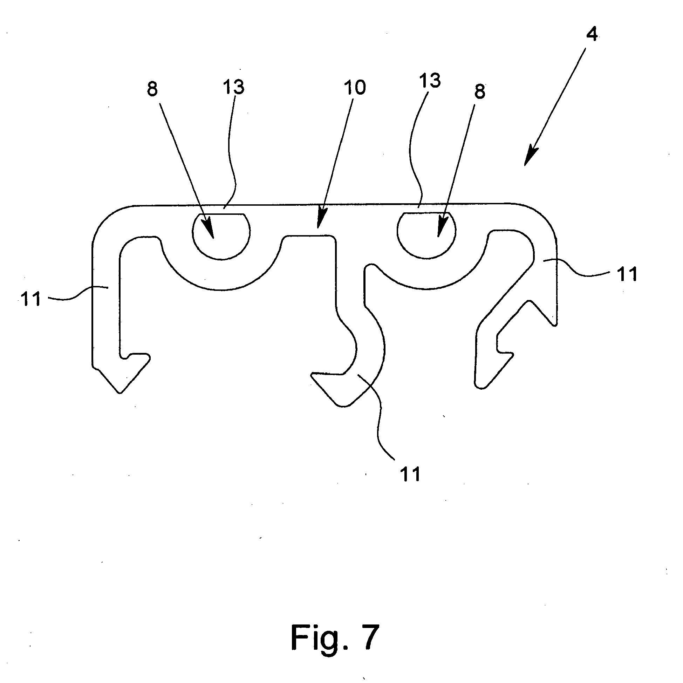

Fig. 7 zeigt ein weiteres Ausführungsbeispiel eines Grundprofils 4 zur Herstellung von Querstangen 2 und Längsstangen 3, das dem Ausfiihrungsbeispiel gemäß Fig. 6 entspricht, abgesehen davon, dass die im Rücken 10 des Grundprofils 4 parallel zueinander verlaufenden Nuten 8 durch Stege 13 nach außen geschlossen sind. Dies hat den Vorteil, dass die Oberfläche des Grundprofils 4 geschlossen ist und damit bessere strömungstechnische Eigenschaften hat. Der Steg 13 muss dann lediglich dort entfernt werden, wo ein Verbindungselement vorzusehen ist.

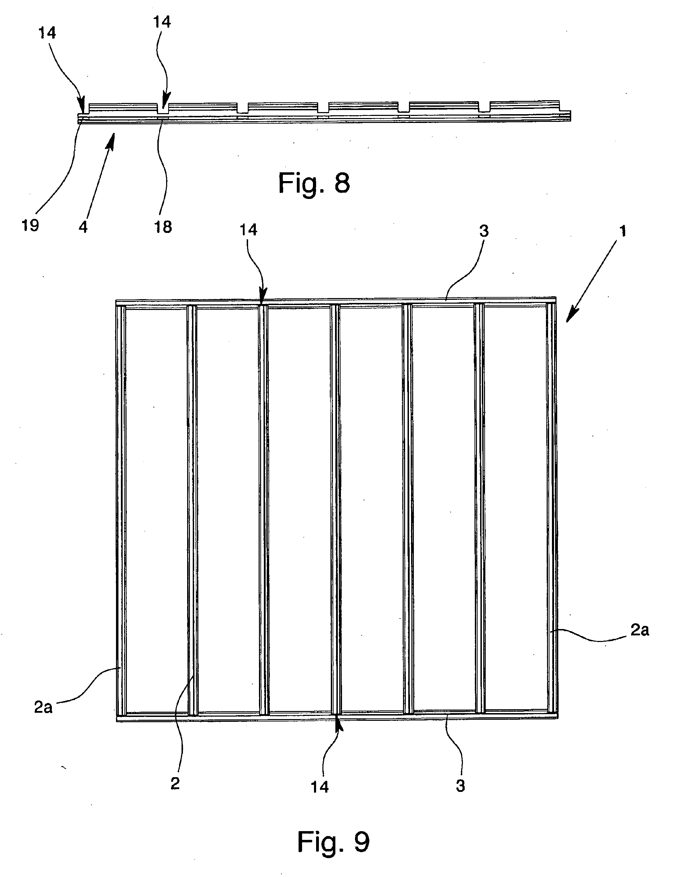

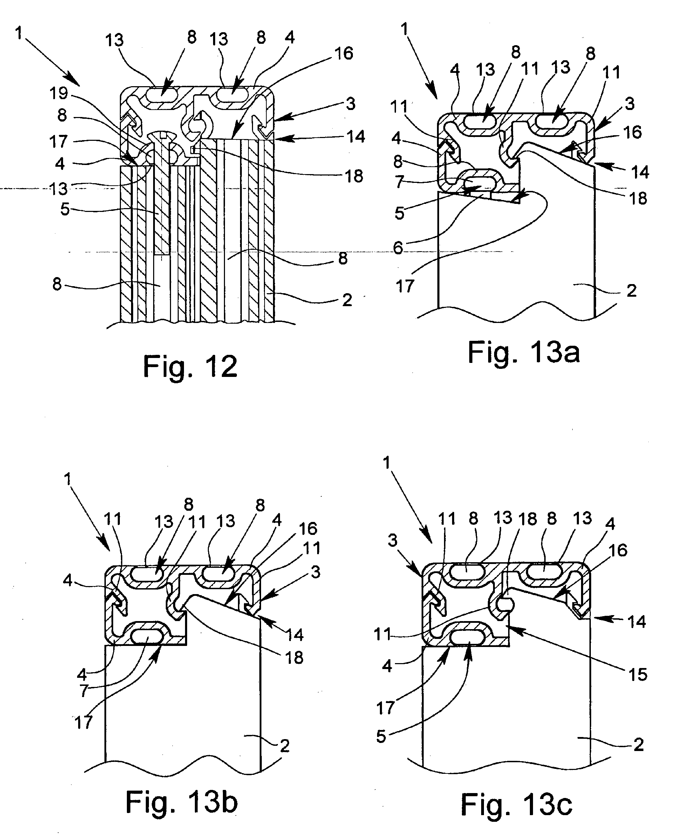

Fig. 8 zeigt ein Ausführungsbeispiel eines Grundprofils 4, beispielsweise zur Herstellung einer in den Fig. 12, 13a, 13b und 13c gezeigten Längsstange, die eine der Anzahl der Querstangen 2 aufweisende Anzahl an Ausnehmungen 14 aufweist. Die Ausnehmungen 14 weisen eine Breite auf, die mindestens der Breite einer Querstange 2 entspricht. Das in Fig. 8 dargestellte Grundprofil ist das im Montagezustand den Querstangen 2 zugewandte Grundprofil 4. Die Ausnehmungen 14 unterscheiden sich von den in den Fig. 2 und 3 dargestellten Ausnehmungen 9 dadurch, dass die Ausnehmungen 14 breiter sind und ein größerer Teil des Grundprofils 4 ausgenommen ist. Beabstandet zu den Ausnehmungen 14 sind Öffnungen 19 vorgesehen, durch die ein Verbindungselement 5 durchgreifen anordenbar ist, um eine Längsstange 3 formschlüssig mit einer Querstange 2 zu verbinden.

Fig. 9 zeigt ein Ausführungsbeispiel eines Rahmens 1, der aus einer Mehrzahl von Querstangen 2 und zwei Längsstangen 3 zusammengesetzt ist. Die Querstangen 2 sind in ihren Endbereichen zumindest teilweise in die Ausnehmungen 14 eingebracht, die in den zu den Querstangen 2 hingeordneten Grundprofilen 4 vorgesehen sind. Die Querstangen 2 sind mit den Längsstangen 3 zusätzlich über Verbindungselemente 5 verbunden. Die Längsstangen 3 und die Querstangen 2 sind dabei derart angeordnet, dass sie sich in einer Ebene befinden.

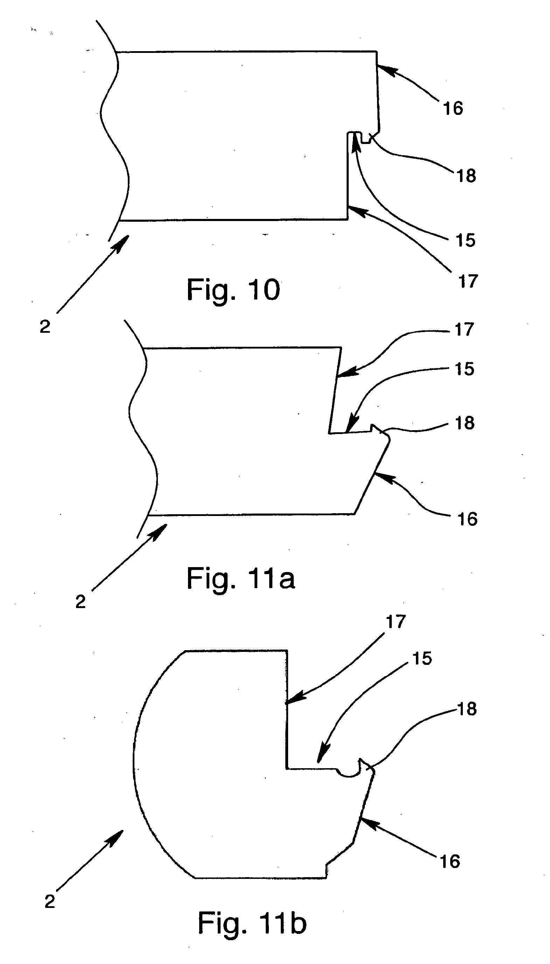

Zur formschlüssigen Verbindung einer Querstange 2 mit einer Längsstange 3 zeigt Fig. 10 ein Ausführungsbeispiel einer Querstange 2, die in einem Endbereich einen Absatz 15 aufweist. Der Absatz 15 weist etwa die Hälfte der Höhe des Querschnitts der Querstange 2 auf und ist in beide von der Querstange 2 umfassten Grundprofile 4 eingebracht. Durch den Absatz 15 entsteht eine erste Stirnfläche 16 und eine zweite Stirnfläche 17 an der Querstange 2. Tatsächlich sind die erste Stirnfläche 16 und die zweite Stirnfläche 17 keine geschlossenen Flächen, sondern damit wird lediglich die durch den Querschnitt der Querstange 2 begrenzte stirnseitige Fläche bezeichnet. Am Absatz 15 ist ein Rasthaken 18 ausgebildet, der im Montagezustand mit einer Längsstange 3 verrastbar ist - siehe Fig. 12, 13a, 13b und 13c.

Fig. 11a zeigt ein weiteres Ausführungsbeispiel einer Querstange 2 mit einem in ihrem Endbereich ausgebildeten Absatz 15, wodurch wiederum eine erste Stirnfläche 16 und eine zweite Stirnfläche 17 entstehen. Bei diesem Ausführungsbeispiel ist sowohl die erste Stirnfläche 16 als auch die zweite Stirnfläche 17 um einen vorbestimmten Winkel relativ zur Außenkante der Querstange 2 geneigt, so dass ein vorteilhafter Eingriff der Querstange 2 in eine Längsstange 3, insbesondere im Bereich einer Ausnehmung 14, erfolgen kann. Im Endbereich des Absatzes 15 ist ein Rasthaken 18 ausgebildet, der im Montagezustand mit dem mittleren Steg 11 des von den Querstangen 2 weggewandten Grundprofils 4 einer Längsstange 3 formschlüssig verrastet - siehe Fig. 13a, 13b und 13c. Demgegenüber ist der Rasthaken 18 gemäß Fig. 10 beispielsweise mit einer Wand des zu den Querstangen hingewandten Grundprofils 4 einer Längsstange 3 verrastbar - siehe Fig. 13a.

Fig. 11b zeigt ein weiteres Ausführungsbeispiel einer Querstange 2 mit einem in ihrem Endbereich ausgebildeten Absatz 15. Durch den Absatz 15 entstehen eine erste Stirnfläche 16 und eine zweite Stirnfläche 17. Die zweite Stirnfläche 17 weist bei diesem Ausführungsbeispiel keine Neigung auf. Die erste Stirnfläche 16 ist um einen vorbestimmten Winkel relativ zur Außenkante der Querstange 2 geneigt. Die Neigung der ersten Stirnfläche 16 ist Abschnittsweise unterschiedlich, wobei im Bereich der Außenkante der Querstange 2 keine Neigung vorhanden ist. Dadurch weist die Stirnfläche 16 eine vorteilhafte Form auf, so dass sie sich im Montagezustand in eine Längsstange 3 einfügt, insbesondere an das von den Querstangen 2 abgewandte Grundprofil 4 anlegt - siehe Fig. 13c. Am Absatz 15 ist ferner ein Rasthaken 18 ausgebildet, dessen Anlagefläche - Rastfläche - sich parallel zur zweiten Stirnfläche 17 erstreckt. An der zur zweiten Stirnfläche 17 hingewandten Seite des Rasthakens 18 ist im Absatz eine Vertiefung auf, die im Montagezustand der Aufnahme des Filtervlieses dient (siehe Fig. 13c).

Fig. 12 zeigt einen Querschnitt einer Längsstange 3 mit daran angeordneter Querstange 2 als Teil eines Rahmens 1, wobei der Schnitt im Bereich der Anschlussstelle der Querstange 2 an die Längsstange 3 liegt. Die Querstange 2 ist im Bereich einer Ausnehmung 14 in die Längsstange 3 eingebracht, wobei die Rastnase 18 der Querstange 2 mit einer Wand des der Querstange 2 zugewandten Grundprofils 4 der Längsstange 3 verrastet ist. Die erste Stirnfläche 16 liegt im Innenbereich, nämlich innerhalb der Ausnehmung 14 in der Längsstange 3, während die zweite Stirnfläche 17 von außen an der Längsstange 3 anliegt. Das von der Querstange 2 weggewandte Grundprofil 4 weist keine Ausnehmungen auf. Neben der formschlüssigen Verbindung der Querstange 2 mit der Längsstange 3 über die Rastnase 18 sind zusätzlich zwei Verbindungselemente 5 vorgesehen - lediglich eins sichtbar, die bei diesem Ausführungsbeispiel als Verbindungsstifte ausgestaltet ist, die durch das Material des zu der Querstange 2 hingewandten Grundprofils 4 in die stirnseitigen Nuten 8 der Querstange 2 eingebracht sind. Dazu weist das zu der Querstange 2 hingewandte Grundprofil 4 Öffnungen 19 auf, die bei diesem Ausführungsbeispiel die Wand der Nut 8 in der Längsstange 3 und den Steg 13 durchtreten. Der Kopf des als Verbindungsstift ausgestalteten Verbindungselements 5 ist größer als die Öffnung 10, so dass der Verbindungsstift nicht durch die Öffnung 19 hinaustreten kann.

Fig. 13a zeigt ein Ausführungsbeispiel eines Querschnitts einer Längsstange 3 mit einer daran angeordneten Querstange 2. Lediglich die Längsstange 3 ist geschnitten dargestellt. Die Querstange 2 ist mit ihrer Rastnase 18 formschlüssig mit dem mittleren Steg 11 des von der Querstange 2 abgewandten Grundprofils 4 der Längsstange 3 verbunden. Dadurch entsteht eine vorteilhafte Stabilität in der Verbindung der Längsstange 3 mit der Querstange 2.

Die erste Stirnfläche 16 ist geneigt, um eine vorteilhafte Positionierung der Querstange 2 mit der Rastnase 18 innerhalb der Ausnehmung 14 in der Längsstange 3 zu ermöglichen. Des Weiteren ist auch die zweite Stirnfläche 17 geneigt, um ein flexibleres Anliegeverhalten der Querstange 2 an der Längsstange 3 und eine einfache Montage zu gewährleisten. Neben der formschlüssigen Verbindung durch die Rastnase 18 ist zusätzlich ein Verbindungselement 5 vorgesehen, dass mit seinem die Stege 6 verbindenden Rücken in eine Nut 8 der Längsstange 3 eingebracht ist. Die Stege 6 des Verbindungselements 5 greifen dabei stirnseitig in die - hier nicht sichtbaren - Nuten 8 der Querstange 2 ein.

Fig. 13b zeigt ein weiteres Ausführungsbeispiel eines Querschnitts einer Längsstange 3 mit daran angeordneter Querstange 2, die mit ihrer Rastnase 18 mit dem mittleren Steg 11 des von der Querstange 2 abgewandten Grundprofils 4 der Längsstange 3 verrastet ist. Das Ausführungsbeispiel gemäß Fig. 13b unterscheidet sich von dem Ausführungsbeispiel gemäß Fig. 13a dadurch, dass die zweite Stirnfläche 17 nicht geneigt ist und im Montagezustand parallel zur Außenfläche der Längsstange 3 verläuft und an dieser anliegt. Sowohl gemäß Fig. 13a als auch gemäß Fig. 13b ist die Querstange 2 mit dem Absatz 15 innerhalb der Ausnehmung 14 angeordnet.

Fig. 13c zeigt ein weiteres Ausführungsbeispiel eines Querschnitts einer Längsstange mit daran angeordneter Querstange 2. Die Querstange 5 ist mit ihrem Absatz 15 in die Ausnehmung 14 der Längsstange 3 eingebracht. Die Querstange 2 ist dadurch mit der Längsstange 3 verbunden, dass zwei Verbindungselemente 5 stirnseitig in die - hier nicht sichtbaren - Nuten 8 der Querstange 2 eingebracht sind. Der Rasthaken 18 ist bei diesem Ausführungsbeispiel nur mittelbar mit der Längsstange 3 verrastet, nämlich derart, dass der Rasthaken 18 und der mittlere Steg 11 des von den Querstangen 2 abgewandten Grundprofils 4 der Längsstange 3 den - nicht dargestellten - Vliesstoff im Montagezustand umschließen und einklemmen. Die Vertiefung am Fuß des Rasthakens 18 bildet dabei zusammen mit dem mittleren Steg 11 des von den Querstangen 2 weggewandten Grundprofils 4 der Längsstange 3 einen im Wesentlichen runden Kanal für den - nicht dargestellten - Vliesstoff. Die zweite Stirnfläche 17 liegt an der Außenfläche der Längsstange 3 an. Die erste Stirnfläche 16 erstreckt sich innerhalb der Längsstange 3 und liegt vorteilhaft an dem äußeren - in Fig. 13c rechts dargestellten - Steg 11 des von den Querstangen 2 weggewandten Grundprofils 4 der Längsstange 4 an.

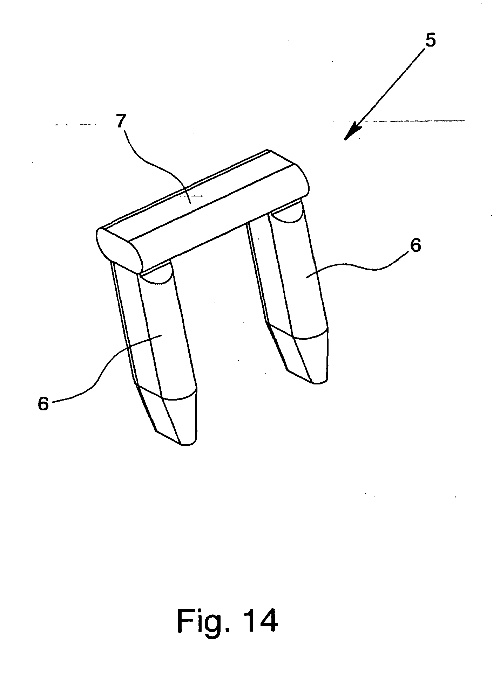

Fig. 14 zeigt ein Ausführungsbeispiel eines Verbindungselements 5, das zwei Stege 6 und einen die Stege 6 miteinander verbindenden Rücken 7 aufweist. Das Verbindungselement 5 ist mit seinem Rücken 7 in eine Nut einer Längsstange 3 einbringbar, so dass die Stege 6 stirnseitig in die Nuten 8 einer Querstange 2 einbringbar sind. Alternativ dazu können die Stege 6 auch durch Öffnungen 19 in der Längsstange 3 bzw. dem zu den Querstangen 2 hingewandten Grundprofil 4 in die Nuten 8 eingebracht werden. Sowohl die Stege 6 als auch der die Stege verbindende Rücken 7 weisen einen ovalen Querschnitt auf. In ihren Endbereichen sind die Stege 6 angefast, um ein einfacheres Einführen der Stege 6 in die stirnseitigen Nuten 8 einer Querstange 2 zu gewährleisten.

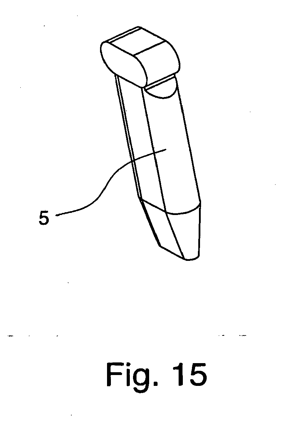

Fig. 15 zeigt ein Ausführungsbeispiel eines Verbindungselements 5, das als Verbindungsstift ausgestaltet ist und beispielsweise durch eine Öffnung 19 in einer Längsstange 3 in die stirnseitigen Nuten 8 einer Querstange 2 einbringbar ist. Zur Verbindung einer Längsstange 3 mit einer Querstange 2 werden für jede Querstange 2 mindestens 2 solcher Verbindungselemente 5 verwendet.

## Patentansprüche

1. Taschenfilter, umfassend mindestens eine Filtertasche und mindestens zwei Querstangen (2), wobei die Filtertasche an den Querstangen (2) befestigt ist, wobei mindestens zwei parallel zueinander angeordnete Längsstangen (3) vorgesehen sind, und wobei die Querstangen (2) zwischen den Längsstangen (3) verlaufen und mit den Längsstangen (3) verbunden sind,
**dadurch gekennzeichnet,**
**dass** die Längsstangen (3) und die Querstangen (2) jeweils zwei in ihrer Längserstreckung (3) formschlüssig zusammengefügte Grundprofile (4) umfassen, dass die Querstangen (2) und die Längsstangen (3) einen identischen Querschnitt aufweisen, und dass die Profilform der beiden Grundprofile zur Bildung einer Längsstange oder einer Querstange identisch ist.

2. Taschenfilter nach Anspruch 1, **dadurch gekennzeichnet, dass** die Querstangen (2) und die Längsstangen (3) durch Verbindungselemente (5) miteinander verbunden sind, bevorzugt die Verbindungelemente (5) mindestens zwei Stege (6) und einen die Stege (6) miteinander verbindenden Rücken (7) aufweisen.

3. Taschenfilter nach Anspruch 2, **dadurch gekennzeichnet, dass** die Längsstangen (3) und die Querstangen (2) an mindestens zwei gegenüberliegenden Seitenflächen eine Nut (8) aufweisen, und dass zur Verbindung einer Längsstange (3) mit einer Querstange (2) mindestens ein Verbindungselement (5) mit seinem Rücken (7) in einer Nut (8) der Längsstange (3) geführt ist, so dass im Montagezustand eine Querstange (2) mit einer Stirnseite auf die Stege (6) des Verbindungselements (5) aufgesteckt ist.

4. Taschenfilter nach Anspruch 3, **dadurch gekennzeichnet, dass** auf zwei gegenüberliegenden Seitenflächen jeweils zwei parallel verlaufende Nuten (8) vorgesehen sind.

5. Taschenfilter nach Anspruch 3 oder 4, **dadurch gekennzeichnet, dass** die Stege (6) eines Verbindungselements (5) stirnseitig in die Nuten (8) der Querstange (2) eingesteckt sind.

6. Taschenfilter einem der Ansprüche 2 bis 5, **dadurch gekennzeichnet, dass** ein Verbindungselement (5) vorgesehen ist, das eine Mehrzahl von Stegpaaren zur Befestigung einer Mehrzahl von Querstangen (2) aufweist.

7. Taschenfilter nach einem der Ansprüche 1 bis 6, **dadurch gekennzeichnet, dass** im Bereich der Seitenwände der Filtertaschen Ausnehmungen (9) in die Längsstangen (3), insbesondere in mindestens ein Grundprofil (4), eingebracht sind.

8. Taschenfilter nach einem der Ansprüche 1 bis 7, **dadurch gekennzeichnet, dass** mindestens sieben Querstangen (2) und mindestens sechs Filtertaschen zwischen den beiden Längsstangen (3) vorgesehen sind, wobei die Filtertaschen durch die Querstangen (2) miteinander verbunden sind.

9. Taschenfilter nach einem der Ansprüche 1 bis 8, **dadurch gekennzeichnet, dass** in mindestens einem Endbereich der Querstangen (2) ein Rasthaken (18) ausgebildet ist, insbesondere der Rasthaken (18) im Montagezustand mit einer Längsstange (3) verrastet ist, bevorzugt, dass der Rasthaken (18) mit mindestens einem Grundprofil (4) der Längsstange (3) verrastet ist, besonders bevorzugt, dass der Rasthaken (18) mit dem von den Querstangen (2) abgewandten Grundprofil (4) der Längsstange (3) verrastet ist.

10. Taschenfilter nach einem der Ansprüche 1 bis 9, dass die Querstangen (2) in mindestens einem Endbereich einen Absatz (15) aufweisen, insbesondere der Absatz (15) in beiden Grundprofilen (4) der Querstangen (2) vorgesehen ist.

11. Taschenfilter nach einem der Ansprüche 1 bis 10, **dadurch gekennzeichnet, dass** in einer Längsstange (3) eine der Anzahl der Querstangen (2) entsprechende Anzahl aus Ausnehmungen (14) vorgesehen sind, bevorzugt, dass mindestens das zu den Querstangen (2) hingewandte Grundprofil (4) einer Längsstange (3) Ausnehmungen (14) aufweist.

12. Taschenfilter nach einem der Ansprüche 1 bis 11, **dadurch gekennzeichnet, dass** die Längsstangen (3) im Bereich der Querstangen (2) mindestens eine Öffnung (19) aufweisen, insbesondere dass eine Öffnung (19) von mindestens einem Verbindungselement (5) durchtreten ist.

## Claims

1. Pocket filter, including at least one filter bag and at least two crossbars (2), wherein the filter bag is attached to the crossbars (2), wherein at least two longitudinal bars (3) are provided arranged parallel to one another, and wherein the crossbars (2) run between the longitudinal bars (3) and are attached to the longitudinal bars (3),
**characterized in**
**that** the longitudinal bars (3) and the crossbars (2) each include two basic profiles (4) form fit together in their longitudinal direction (3), that the crossbars (2) and the longitudinal bars (3) have an identical cross section, and that the profile shape of both basic profiles is identical for forming a longitudinal bar or a crossbar.

2. Pocket filter according to claim 1, **characterized in that** the crossbars (2) and the longitudinal bars (2) are connected to one another with connecting elements (5), preferably the connecting elements (5) have at least two crosspieces (6) and a ridge (7) joining the crosspieces (6) to one another.

3. Pocket filter according to claim 2, **characterized in that** the longitudinal bars (3) and the crossbars (2) have a groove (8) on at least two opposing faces, and that at least one connecting element (5) is guided with its ridge (7) into a groove (8) of the longitudinal bar (3) for connecting a longitudinal bar (3) to a crossbar (2), so that in the mounted state, a crossbar (2) is mounted on the crosspiece (6) of the connecting element (5) with one end face.

4. Pocket filter according to claim 3, **characterized in that** two grooves (8) running parallel are provided on each of two opposing faces.

5. Pocket filter according to claim 3 or 4, **characterized in that** the crosspiece (6) of a connecting element (5) is mounted on the end face in the grooves (8) of the crossbar (2).

6. Pocket filter according to any one of claims 2 to 5, **characterized in that** a connecting element (5) is provided, which has a plurality of crosspiece pairs for attaching a plurality of crossbars (2).

7. Pocket filter according to any one of claims 1 to 6, **characterized in that** recesses (9) in the longitudinal bars (3), in particular in at least one basic profile (4), are provided in the area of the sidewalls of the filter bags.

8. Pocket filter according to any one of claims 1 to 7, **characterized in that** at least seven crossbars (2) and at least six filter bags are provided between the two longitudinal bars (3), wherein the filter bags are connected to one another by the crossbars (2).

9. Pocket filter according to any one of claims 1 to 8, **characterized in that** a catch (18) is formed in at least one end section of the crossbars (2), in particular, the catch (18) is locked in place with a longitudinal bar (3) in the mounted state, preferably that the catch (18) is locked in place with at least one basic profile (4) of the longitudinal bar (3), more preferably, that the catch (18) is locked in place with the basic profile (4) of the longitudinal bar (3) facing away from the crossbars (2).

10. Pocket filter according to any one of claims 1 to 9, in that the crossbars (2) have a ledge (15) in at least one end section, in particular the ledge (15) is provided in both basic profiles (4) of the crossbars (2).

11. Pocket filter according to any one of claims 1 to 10, **characterized in that** a number of crossbars (2) corresponding to the number of recesses (14) are provided in a longitudinal bar (3), preferably that at least the basic profile (4) of a longitudinal bar (3) facing the crossbars (2) has recesses (14).

12. Pocket filter according to any one of claims 1 to 11, **characterized in that** the longitudinal bars (3) in the area of the crossbars (2) have at least one opening (19), in particular that an opening (19) has at least one connecting element (5) through it.

## Revendications

1. Filtre à poches, comprenant au moins une poche de filtre et au moins deux barres transversales (2), la poche de filtre étant fixée aux barres transversales (2), au moins deux barres longitudinales (3) disposées parallèlement l'une à l'autre étant prévues, et les barres transversales (2) s'étendant entre les barres longitudinales (3) et étant connectées aux barres longitudinales (3),
**caractérisé en ce que**
les barres longitudinales (3) et les barres transversales (2) comprennent à chaque fois deux profilés de base (4) assemblés par engagement par correspondance de formes dans leur étendue longitudinale (3), **en ce que** les barres transversales (2) et les barres longitudinales (3) présentent une section transversale identique et **en ce que** la forme profilée des deux profilés de base pour former une barre longitudinale ou une barre transversale est identique.

2. Filtre à poches selon la revendication 1, **caractérisé en ce que** les barres transversales (2) et les barres longitudinales (3) sont connectées les unes aux autres par des éléments de liaison (5), de préférence les éléments de liaison (5) présentent au moins deux nervures (6) et un dos (7) reliant les nervures (6) les unes aux autres.

3. Filtre à poches selon la revendication 2, **caractérisé en ce que** les barres longitudinales (3) et les barres transversales (2) présentent une rainure (8) au niveau d'au moins deux faces latérales opposées, et **en ce que** pour la connexion d'une barre longitudinale (3) à une barre transversale (2), au moins un élément de liaison (5) est guidé avec son dos (7) dans une rainure (8) de la barre longitudinale (3), de sorte que dans l'état de montage, une barre transversale (2) soit enfichée avec un côté frontal sur les nervures (6) de l'élément de liaison (5).

4. Filtre à poches selon la revendication 3, **caractérisé en ce qu'**à chaque fois deux rainures (8) s'étendant parallèlement sont prévues sur deux faces latérales opposées.

5. Filtre à poches selon la revendication 3 ou 4, **caractérisé en ce que** les nervures (6) d'un élément de liaison (5) sont enfichées du côté frontal dans les rainures (8) des barres transversales (2).

6. Filtre à poches selon l'une quelconque des revendications 2 à 5, **caractérisé en ce qu'**il est prévu un élément de liaison (5) qui présente une pluralité de paires de nervures pour la fixation d'une pluralité de barres transversales (2).

7. Filtre à poches selon l'une quelconque des revendications 1 à 6, **caractérisé en ce que** dans la région des parois latérales des poches de filtre, des évidements (9) sont pratiqués dans les barres longitudinales (3), en particulier dans au moins un profilé de base (4).

8. Filtre à poches selon l'une quelconque des revendications 1 à 7, **caractérisé en ce qu'**au moins sept barres transversales (2) et au moins six poches de filtre sont prévues entre les deux barres longitudinales (3), les poches de filtre étant connectées les unes aux autres par les barres transversales (2).

9. Filtre à poches selon l'une quelconque des revendications 1 à 8, **caractérisé en ce qu'**un crochet d'encliquetage (18) est réalisé dans au moins une région d'extrémité des barres transversales (2), en particulier le crochet d'encliquetage (18) est encliqueté dans l'état de montage avec une barre longitudinale (3), de préférence **en ce que** le crochet d'encliquetage (18) est encliqueté avec au moins un profilé de base (4) de la barre longitudinale (3), particulièrement préférablement **en ce que** le crochet d'encliquetage (18) est encliqueté avec le profilé de base (4) de la barre longitudinale (3) opposé aux barres transversales (2).

10. Filtre à poches selon l'une quelconque des revendications 1 à 9, **caractérisé en ce que** les barres transversales (2) présentent un épaulement (15) dans au moins une région d'extrémité, en particulier l'épaulement (15) est prévu dans les deux profilés de base (4) des barres transversales (2).

11. Filtre à poches selon l'une quelconque des revendications 1 à 10, **caractérisé en ce que** dans une barre longitudinale (3) est prévu un nombre d'évidements (14) correspondant au nombre des barres transversales (2), de préférence **en ce qu'**au moins le profilé de base (4) d'une barre longitudinale (3) tourné vers les barres transversales (2) présente des évidements (14).

12. Filtre à poches selon l'une quelconque des revendications 1 à 11, **caractérisé en ce que** les barres longitudinales (3) présentent, dans la région des barres transversales (2), au moins une ouverture (19), en particulier **en ce qu'**une ouverture (19) est traversée par au moins un élément de liaison (5).
